# FASCICULE DE BREVET EUROPEEN

(11) **EP 2 234 827 B1**
(45) Date de publication et mention de la délivrance du brevet: **07.09.2011**
(21) Numéro de dépôt: 08854715.3
(22) Date de dépôt: 05.11.2008
(51) Int. Cl.: B60G 3/26, B60G 15/06

(54) **SUSPENSION ARRIERE DE VEHICULE AUTOMOBILE AVEC CONTROLE DU PINCEMENT ET DU CARROSSAGE ET BIELLETTE ADAPTEE A UNE TELLE SUSPENSION**
HINTERRADAUFHÄNGUNG FÜR EIN KRAFTFAHRZEUG MIT SPUR- UND STURZSTEUERUNG UND FÜR SOLCH EINE AUFHÄNGUNG AUSGEFÜHRTE STREBE
MOTOR VEHICLE REAR SUSPENSION WITH TOE AND CAMBER CONTROL, AND LINK TAILORED TO SUCH A SUSPENSION

(30) Priorité: 12.11.2007 FR 0707909
(43) Date de publication de la demande: 06.10.2010
(73) Titulaire: Renault S.A.S., 92100 Boulogne-Billancourt (FR)
(72) Inventeur: EJARQUE, Pascal, F-78340 Les Clayes sous Bois (FR)
(74) Mandataire: Rougemont, Bernard
(86) Numéro de dépôt international: PCT/FR2008/051993
(87) Numéro de publication internationale: WO 2009/068780

(56) Documents cités:
- EP-A- 0 307 547
- FR-A- 2 695 595
- JP-A- 6 064 420
- US-A- 5 098 116

## Description

L'invention concerne une suspension arrière de véhicule automobile et une biellette adaptée à une telle suspension.

Plus particulièrement, l'invention concerne une suspension arrière de véhicule automobile, comprenant un bras longitudinal s'étendant dans la direction longitudinale du véhicule, dont l'une des extrémités est articulée au châssis du véhicule et dont l'autre extrémité est reliée de façon articulée à l'extrémité inférieure d'un ensemble amortisseur et ressort de suspension et à une extrémité d'un bras transversal par rapport au bras longitudinal, ce bras longitudinal portant un essieu de roue.

Une telle suspension présente notamment l'avantage de reporter vers l'arrière du véhicule, l'ensemble amortisseur et ressort de suspension, ce qui permet d'éviter de renforcer le passage de roue pour supporter cet ensemble et d'abaisser le plancher du véhicule, ce qui est particulièrement utile dans le cas d'un véhicule utilitaire.

Afin d'obtenir un bon comportement routier d'un véhicule, il est nécessaire que la suspension arrière du véhicule permette de contrôler le pincement (ou parallélisme) et l'angle de carrossage des roues.

De telles suspensions sont par exemple décrites dans le document FR 2 695 595. Les suspensions décrites dans ce document présentent toutefois une structure différente de celle concernée par l'invention.

Par ailleurs, le contrôle du pincement et de l'angle de carrossage d'une suspension est généralement obtenu au moyen d'un point de fixation sur le châssis du véhicule, par exemple par un bras reliant la suspension au châssis. Cet agencement nécessite toutefois de prévoir l'encombrement nécessaire à cette fixation sur la caisse, et éventuellement un renforcement du châssis au niveau de ce point de fixation.

Le but de la présente invention est de proposer une suspension arrière du type décrit ci-dessus, permettant de contrôler le pincement (ou parallélisme) et l'angle de carrossage des roues, sans rajout d'un point de fixation au châssis du véhicule.

Ce but est atteint selon l'invention, grâce au fait que le bras longitudinal comporte un bras fixe dont l'extrémité est reliée par une articulation élastique à une biellette dont l'extrémité opposée à cette articulation élastique est reliée à l'amortisseur.

Il existe ainsi grâce au bras fixe et à la biellette une liaison élastique entre le bras longitudinal et l'amortisseur qui permet de contrôler le pincement et l'angle de carrossage des roues.

De préférence, la biellette s'étend dans une direction sensiblement parallèle au bras transversal.

De préférence également, le bras fixe a une forme courbée, la concavité de cette courbure étant dirigée vers l'extrémité arrière du bras longitudinal.

Cette disposition permet de fixer le bras fixe sur le bras longitudinal à une distance suffisante de l'articulation inférieure de l'amortisseur.

Selon d'autres particularités de l'invention :
- la base du bras fixe est située entre l'essieu de roue et l'extrémité arrière du bras longitudinal,
- la base du bras est fixée sur une partie coudée du bras longitudinal, la concavité de la courbure de cette partie étant dirigée vers l'extérieur.

Ces dispositions permettent de positionner l'extrémité du bras fixe à une distance du corps de l'amortisseur correspondant à la dimension de la biellette.

L'invention concerne également une biellette pour suspension arrière de véhicule automobile, destinée à relier un bras fixe du bras longitudinal à l'amortisseur d'une suspension arrière selon l'invention, la biellette comprenant une première ouverture cylindrique apte à être engagée sur un tenon cylindrique porté par le bras fixe du bras longitudinal et une seconde ouverture cylindrique apte à être engagée sur le corps de l'amortisseur.

Selon des particularités avantageuses de l'invention, la première ouverture porte une bague en caoutchouc assurant une liaison élastique entre la biellette et le tenon du bras fixe et la seconde ouverture porte une bague en caoutchouc ou plusieurs segments annulaires en caoutchouc assurant une liaison élastique entre la biellette et le corps de l'amortisseur.

Il existe ainsi une liaison élastique entre la biellette, le bras fixe et l'amortisseur qui filtre les vibrations appliquées sur l'ensemble de la suspension.

D'autres particularités et avantages de l'invention apparaîtront encore tout au long de la description ci-après.

L'invention est maintenant décrite en référence aux dessins annexés, non limitatifs, dans lesquels :
- la figure 1 est une vue en perspective d'une suspension arrière de véhicule automobile selon l'invention,
- la figure 2 est une vue en coupe longitudinale de la biellette de la suspension représentée sur la figure 1,
- la figure 3 est une vue en plan de la biellette,
- la figure 4 est une vue en perspective de la biellette,
- la figure 5 est une vue de côté de la biellette.

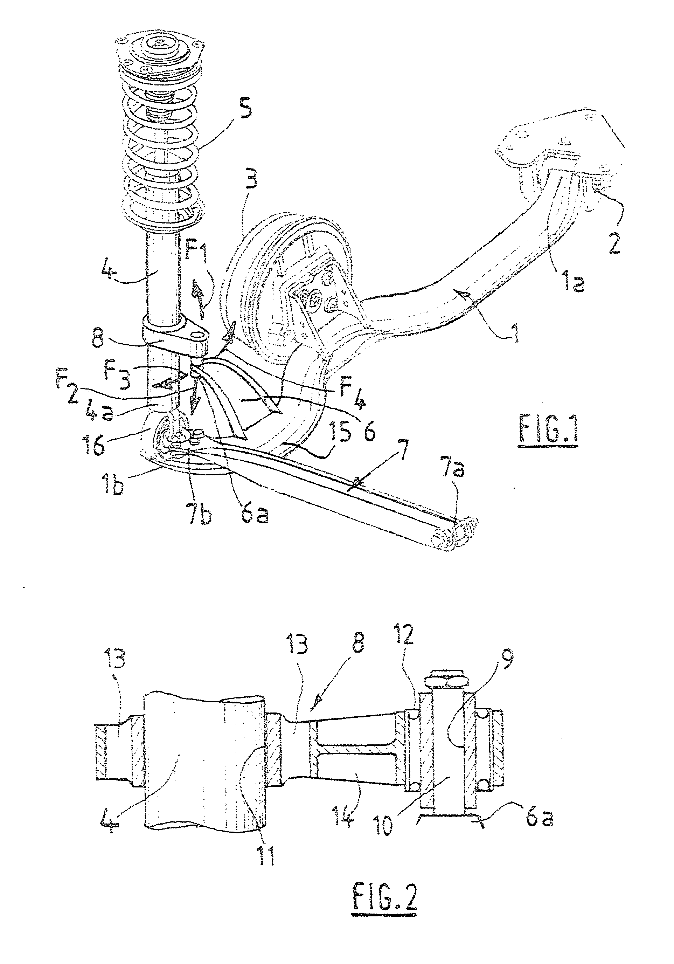

Dans la réalisation représentée sur la figure 1, la suspension arrière de véhicule automobile, comprend un bras longitudinal 1 s'étendant dans la direction longitudinale du véhicule.

L'une des extrémités 1a de ce bras 1 est articulée en 2 au châssis du véhicule et l'autre extrémité 1b du bras 1 est reliée de façon articulée grâce à une articulation élastique 16 à l'extrémité inférieure 4a d'un ensemble amortisseur 4 et ressort de suspension 5 (jambe de force) et à une extrémité 7b d'un bras 7 transversal par rapport au bras longitudinal 1.

En outre, ce bras longitudinal 1 porte un essieu de roue 3.

Conformément à l'invention, le bras longitudinal 1 comporte un bras fixe 6 faisant saillie vers le haut dont l'extrémité 6a est reliée par une articulation élastique à une biellette 8 dont l'extrémité opposée à cette articulation élastique est reliée à l'amortisseur 4.

Comme montré par les figures 2 à 5, la biellette 8 comprend une première ouverture cylindrique 9 qui est engagée (voir figure 2) sur un tenon cylindrique 10 porté par l'extrémité 6a du bras fixe 6 et une seconde ouverture cylindrique 11 engagée sur le corps de l'amortisseur 4.

Ces deux ouvertures 9, 11 ont des axes perpendiculaires à la longueur de la biellette 8.

La première ouverture 9 porte une bague 12 en caoutchouc assurant une liaison élastique entre la biellette 8 et le tenon 10 du bras fixe 6.

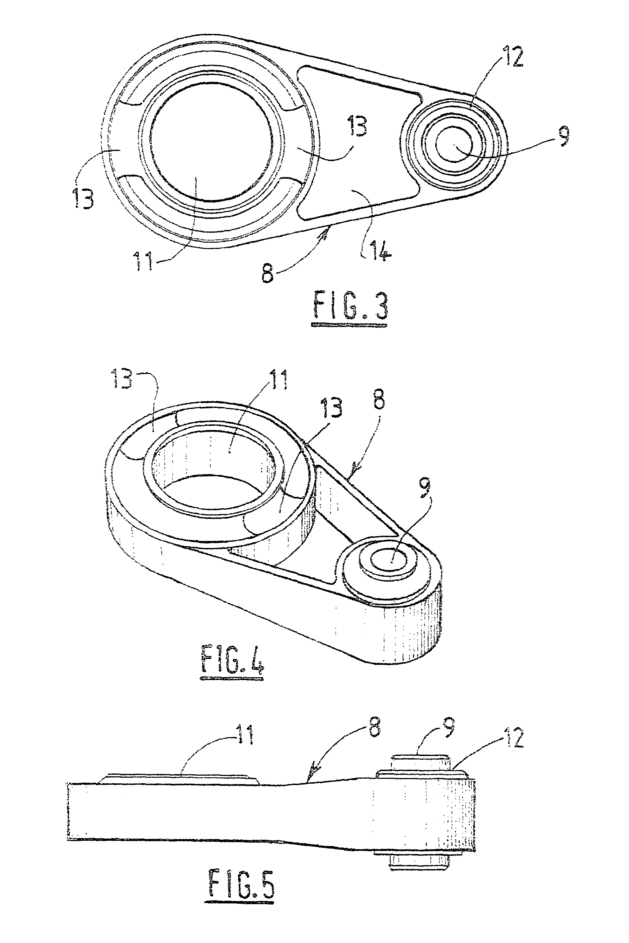

La seconde ouverture 11 porte une bague en caoutchouc ou deux segments annulaires 13 en caoutchouc comme montré par les figures 3 et 4 assurant une liaison élastique entre la biellette 8 et le corps de l'amortisseur 4.

Par ailleurs, la partie centrale 14 de la biellette 8 est évidée pour l'alléger.

La figure 1 montre d'autre part que la biellette 8 s'étend vers l'intérieur dans une direction sensiblement parallèle au bras transversal 7.

D'autre part, le bras fixe 6 a une forme courbée, la concavité de cette courbure étant dirigée vers l'extrémité arrière 1b du bras longitudinal 1.

De plus, la base du bras fixe 6 est située entre l'essieu de roue 3 et l'extrémité arrière 1b du bras longitudinal 1.

En outre, la base du bras 6 est fixée sur une partie coudée 15 du bras longitudinal 1, la concavité de la courbure de cette partie 15 étant dirigée vers l'extérieur.

Cette courbure permet de positionner l'extrémité 6a du bras à une distance de l'amortisseur 4 correspondant à la dimension de la biellette 8.

Les liaisons élastiques existant entre le bras fixe 6, la biellette 8 et le corps de l'amortisseur 4 permettent de filtrer les vibrations.

La liaison existant entre le bras longitudinal 1 et le corps de l'amortisseur 4 permet de contrôler le pincement et l'angle de carrossage des roues dans toute la zone de débattement des différents éléments de la suspension.

En particulier le débattement de la biellette 8 au niveau de sa liaison avec l'extrémité 6a du bras fixe 6, qui s'inscrit dans une sphère (voir flèches F1, F2, F3, F4 sur figure 1) permet de faire varier l'angle de carrossage et le pincement d'une manière positive pour le comportement du véhicule en modifiant l'axe de charnière créé par le point de fixation avant 2 du bras longitudinal 1 et l'articulation élastique 16 qui se trouve au pied de l'amortisseur 4.

## Revendications

1. Suspension arrière de véhicule automobile, comprenant un bras longitudinal (1) s'étendant dans la direction longitudinale du véhicule, dont l'une des extrémités (1a) est articulée au châssis du véhicule et dont l'autre extrémité (1b) est reliée de façon articulée à l'extrémité inférieure (4a) d'un ensemble amortisseur (4) et ressort de suspension (5) et à une extrémité (7b) d'un bras transversal (7) par rapport au bras longitudinal (1), ce bras longitudinal (1) portant un essieu de roue (3), **caractérisée en ce que** le bras longitudinal (1) comporte un bras fixe (6) dont l'extrémité (6a) est reliée par une articulation élastique à une biellette (8), dont l'extrémité opposée à cette articulation élastique est reliée à l'amortisseur (4).

2. Suspension arrière selon la revendication 1, **caractérisée en ce que** la biellette (8) s'étend dans une direction sensiblement parallèle au bras transversal (7).

3. Suspension arrière selon l'une des revendications 1 ou 2, **caractérisée en ce que** le bras fixe (6) a une forme courbée, la concavité de cette courbure étant dirigée vers l'extrémité arrière (1b) du bras longitudinal (1).

4. Suspension arrière selon l'une des revendications 1 à 3, **caractérisée en ce que** la base du bras fixe (6) est située entre l'essieu de roue (3) et l'extrémité arrière (1b) du bras longitudinal (1).

5. Suspension arrière selon l'une des revendications 1 à 4, **caractérisée en ce que** la base du bras (6) est fixée sur une partie coudée (15) du bras longitudinal (1), la concavité de la courbure de cette partie (15) étant dirigée vers l'extérieur.

6. Biellette pour suspension arrière de véhicule automobile, destinée à relier un bras fixe du bras longitudinal (1) à l'amortisseur (4) d'une suspension arrière selon l'une des revendications 1 à 5, **caractérisée en ce que** la biellette (8) comprend une première ouverture cylindrique (9) apte à être engagée sur un tenon cylindrique (10) porté par le bras fixe du bras longitudinal et une seconde ouverture cylindrique (11) apte à être engagée sur le corps de l'amortisseur (4).

7. Biellette selon la revendication 6, **caractérisée en ce que** la première ouverture (9) porte une bague en caoutchouc (12) assurant une liaison élastique entre la biellette (8) et le tenon (10).

8. Biellette selon l'une des revendications 1 ou 2, **caractérisée en ce que** la seconde ouverture (11) porte une bague en caoutchouc ou plusieurs segments annulaires (13) en caoutchouc assurant une liaison élastique entre la biellette (8) et le corps de l'amortisseur (4).

## Claims

1. Rear suspension of a motor vehicle, comprising a longitudinal arm (1) extending in the longitudinal direction of the vehicle, one of the ends (1a) of which arm is articulated to the chassis of the vehicle and the other end (1b) of which arm is connected in an articulated manner to the lower end (4a) of a damper (4)/suspension spring (5) assembly and to an end (7b) of a transverse arm (7) which extends transversely with respect to the longitudinal arm (1), this longitudinal arm (1) bearing a wheel axle (3), **characterized in that** the longitudinal arm (1) comprises a fixed arm (6) of which the end (6a) is connected by an elastic articulation to a link (8) of which the end opposed to this elastic articulation is connected to the damper (4).

2. Rear suspension according to Claim 1, **characterized in that** the link (8) extends in a direction substantially parallel to the transverse arm (7).

3. Rear suspension according to either of Claims 1 and 2, **characterized in that** the fixed arm (6) has a curved shape, the concavity of this curvature being directed towards the rear end (1b) of the longitudinal arm (1).

4. Rear suspension according to one of Claims 1 to 3, **characterized in that** the base of the fixed arm (6) is situated between the wheel axle (3) and the rear end (1b) of the longitudinal arm (1).

5. Rear suspension according to one of Claims 1 to 4, **characterized in that** the base of the arm (6) is fixed to a bent part (15) of the longitudinal arm (1), the concavity of the curvature of this part (15) being directed towards the outside.

6. Link for a rear suspension of a motor vehicle, which link is intended to connect a fixed arm of the longitudinal arm (1) to the damper (4) of a rear suspension according to one of Claims 1 to 5, **characterized in that** the link (8) comprises a first cylindrical opening (9) designed to be fitted over a cylindrical tenon (10) borne by the fixed arm of the longitudinal arm, and a second cylindrical opening (11) designed to be fitted over the body of the damper (4).

7. Link according to Claim 6, **characterized in that** the first opening (9) bears a rubber ring (12) providing an elastic connection between the link (8) and the tenon (10).

8. Link according to either of Claims 6 or 7, **characterized in that** the second opening (11) bears a rubber ring or a plurality of annular rubber segments (13) providing an elastic connection between the link (8) and the body of the damper (4).

## Patentansprüche

1. Hinterradaufhängung eines Kraftfahrzeugs, die einen sich in Längsrichtung des Fahrzeugs erstreckenden Längsarm (1) enthält, von dem ein Ende (1a) an das Fahrwerk des Fahrzeugs angelenkt und das andere Ende (1b) gelenkig mit dem unteren Ende (4a) einer Stoßdämpfer- (4) und Aufhängungsfeder-Einheit (5) und mit einem Ende (7b) eines bezüglich des Längsarms (1) quer liegenden Arms (7) verbunden ist, wobei dieser Längsarm (1) eine Radachse (3) trägt, **dadurch gekennzeichnet, dass** der Längsarm (1) einen ortsfesten Arm (6) aufweist, dessen Ende (6a) über ein elastisches Gelenk mit einem Schwingarm (8) verbunden ist, dessen diesem elastischen Gelenk entgegengesetztes Ende mit dem Stossdämpfer (4) verbunden ist.

2. Hinterradaufhängung nach Anspruch 1, **dadurch gekennzeichnet, dass** der Schwingarm (8) sich in einer Richtung im Wesentlichen parallel zum Querarm (7) erstreckt.

3. Hinterradaufhängung nach einem der Ansprüche 1 oder 2, **dadurch gekennzeichnet, dass** der ortsfeste Arm (6) eine gekrümmte Form hat, wobei die Konkavität dieser Krümmung zum hinteren Ende (1b) des Längsarms (1) gerichtet ist.

4. Hinterradaufhängung nach einem der Ansprüche 1 bis 3, **dadurch gekennzeichnet, dass** die Basis des ortsfesten Arms (6) sich zwischen der Radachse (3) und dem hinteren Ende (1b) des Längsarms (1) befindet.

5. Hinterradaufhängung nach einem der Ansprüche 1 bis 4, **dadurch gekennzeichnet, dass** die Basis des Arms (6) an einem gekrümmten Bereich (15) des Längsarms (1) befestigt ist, wobei die Konkavität der Krümmung dieses Bereichs (15) nach außen gerichtet ist.

6. Schwingarm für eine Hinterradaufhängung eines Kraftfahrzeugs, der dazu bestimmt ist, einen ortsfesten Arm des Längsarms (1) mit dem Stossdämpfer (4) einer Hinterradaufhängung nach einem der Ansprüche 1 bis 5 zu verbinden, **dadurch gekennzeichnet, dass** der Schwingarm (8) eine erste zylindrische Öffnung (9), die auf einen zylindrischen Zapfen (10) eingesetzt werden kann, der vom ortsfesten Arm des Längsarms getragen wird, und eine zweite zylindrische Öffnung (11) enthält, die auf den Körper des Stossdämpfers (4) eingesetzt werden kann.

7. Schwingarm nach Anspruch 6, **dadurch gekennzeichnet, dass** die erste Öffnung (9) einen Kautschukring (12) trägt, der eine elastische Verbindung wischen dem Schwingarm (8) und dem Zapfen (10) gewährleistet.

8. Schwingarm nach einem der Ansprüche 6 oder 7, **dadurch gekennzeichnet, dass** die zweite Öffnung (11) einen Kautschukring oder mehrere ringförmige Segmente (13) aus Kautschuk trägt, die eine elastische Verbindung wischen dem Schwingarm (8) und dem Körper des Stossdämpfers (4) gewährleisten.
